# EUROPÄISCHE PATENTSCHRIFT

(11) **EP 0 764 178 B1**
(45) Veröffentlichungstag und Bekanntmachung des Hinweises auf die Patenterteilung: **28.11.2001**
(21) Anmeldenummer: 95923222.4
(22) Anmeldetag: 01.06.1995
(51) Int. Cl.: C08G 18/32, C08G 18/65, C08G 18/36

(54) **VERWENDUNG VON DIMERDIOL IN POLYURETHAN-FORMKÖRPERN**
USE OF DIMER DIOL IN POLYURETHANE MOULDED BODIES
UTILISATION DE DIOL DIMERE DANS DES CORPS MOULES EN POLYURETHANNE

(30) Priorität: 10.06.1994 DE 4420310
(43) Veröffentlichungstag der Anmeldung: 26.03.1997
(73) Patentinhaber: Cognis Deutschland GmbH, 40589 Düsseldorf (DE)
(72) Erfinder: DAUTE, Peter, D-27616 Beverstadt (DE); GRÜTZMACHER, Roland, D-42489 Wülfrath (DE); WESTFECHTEL, Alfred, D-40723 Hilden (DE); MERTSCHEIT, Nicole, D-40724 Hilden (DE)
(86) Internationale Anmeldenummer: EP9502094
(87) Internationale Veröffentlichungsnummer: WO9534592

(56) Entgegenhaltungen:
- DE-A- 4 237 965
- DE-A- 4 308 100
- FR-A- 2 577 934

## Beschreibung

### Gebiet der Erfindung

Die Erfindung betrifft die Verwendung von Dimerdiol als Polyol-Komponente in Polyurethan-Formkörpern.

### Stand der Technik

Dimere Fettalkohole (Dimerdiole) sind seit langem bekannt.

So wird z. B. in der DE-11 98 348 ihre Herstellung durch Dimerisierung von ungesättigten Fettalkoholen mit basischen Erdalkalimetall-Verbindungen bei mehr als 280 °C beschrieben.

Sie können auch durch Hydrierung von dimeren Fettsäuren und/oder deren Estern gemäß der deutschen Auslegeschrift DE-B-17 68 313 hergestellt werden. Unter den hier beschriebenen Umständen werden nicht nur die Carboxylgruppen der Fettsäuren zu Hydroxylgruppen hydriert, sondern auch gegebenenfalls noch in den dimerisierten Fettsäuren bzw. deren Estern enthaltene Doppelbindungen zum Teil oder vollständig hydriert. Es ist aber auch möglich, die Hydrierung so durchzuführen, daß die Doppelbindungen während der Hydrierung vollständig erhalten bleiben. In diesem Fall fallen ungesättigte Dimerdiole an.
Bevorzugt wird die Hydrierung so durchgeführt, daß die Doppelbindungen möglichst vollständig hydriert werden.

Eine andere Möglichkeit zur Herstellung von Dimerdiolen besteht in der Dimerisierung von ungesättigten Alkoholen in Gegenwart von Kieselerde/Tonerde-Katalysatoren und basischer Alkalimetallverbindungen gemäß der internationalen Anmeldung WO 91/13918.

Unabhängig von den beschriebenen Verfahren zur Herstellung der Dimerdiole werden bevorzugt solche Dimerdiole verwendet, die aus Fettsäuren oder deren Estern bzw. Fettalkoholen mit 18 C-Atomen hergestellt worden sind. Auf diese Weise entstehen Dimerdiole mit 36 C-Atomen. Dimerdiole, die nach den oben genannten technischen Verfahren hergestellt worden sind, weisen stets auch wechselnde Mengen an Trimertriolen und monofunktionellen Alkoholen auf. In der Regel liegt dabei der Anteil an Dimerdiolen über 70 Gew.-% und der Rest sind Trimertriole und Monomeralkohole. Im Sinne der Erfindung können sowohl diese Dimerdiole eingesetzt werden als auch reinere Dimerdiole mit über 90 Gew.-% Dimerdiolanteil. Insbesondere bevorzugt werden Dimerdiole mit über 90 bis 99 Gew.-% Dimerdiolanteil, wobei hiervon solche Dimerdiole wiederum bevorzugt sind, deren Doppelbindung zumindest teilweise oder vollständig hydriert sind.

Bei der Herstellung von Dimerfettsäure fällt stets auch ein Anteil an trimerisierter Fettsäure an. Durch destillative Abtrennung der Dimerfettsäure kann diese Trimerfettsäure angereichert werden. Nach Veresterung mit beispielsweise Methanol können die Ester der Trimerfettsäure analog den Estern der Dimerfettsäure zu Trimertriol hydriert werden. Dieses Trimertriol, ein trifunktioneller Alkohol mit 54 C-Atomen, kann ebenfalls im Rahmen der Erfindung eingesetzt werden.

Es ist auch bekannt, das Dimerdiol als Polyol durch Umsetzung mit Diisocyanaten zur Herstellung von Polyurethan-Überzügen zu verwenden. So werden in der DE-12 25 795 Polyurethanlacke aus dimeren und/oder trimeren Fettalkoholen mit einer durchschnittlichen Anzahl von 36 bzw. 54 C-Atomen beschrieben.

FR-A-2 577 934 offenbart die Verwendung dimerdiolhaltiger Polyurethane als transparente Klebstoffe.

"Gießharze" sind bekanntlich flüssige oder durch mäßige Erwärmung verflüssigbare synthetische Harze, die in offene Formen gegossen werden und dort erhärten. Zu den Gießharzen zählen auch Isocyanat-Gießharze. Darunter werden nach DIN 55958 Kunstharze verstanden, die auf aliphatischen, cycloaliphatischen oder aromatischen Isocyanaten basieren und noch freie Isocyanat-Endgruppen enthalten. Ihre Aushärtung kann unter verschiedenen Bedingungen erfolgen. So besteht z.B. ein einkomponentiges Gießharz aus einem Polyurethanprepolymeren mit endständigen freien oder blockierten Isocyanat-Gruppen, die bei Feuchtigkeitseinwirkung aushärten, wobei eine Erwärmung erfolgen kann, um z.B. die Reaktion zu beschleunigen oder die Festigkeit zu erhöhen. Ein zweikomponentiges Gießharz basiert z.B. auf Polyhydroxyverbindungen auf Basis von verzweigten Polyestern als erste Komponente und auf Polyisocyanat als zweiter Komponente. Nach dem Mischen beider Komponenten härten sie bei Raumtemperatur oder leicht erhöhter Temperatur aus. Derartige zweikomponentige Gießharze werden z.B. für den Verguß von Kabelarmaturen verwendet.

Gießharze aus hauptsächlich difunktionellen Verbindungen lassen sich in der Wärme verformen oder schmelzen und zeigen ein thermoplastisches Verhalten.

Solche Beschichtungen oder Polyurethanformkörper in Form von beispielsweise Beschichtungsmassen oder Gießharzen werden oftmals in chemisch aggresiver Umgebung eingesetzt. Auch unter diesen Bedingungen darf es nicht zu einer Hydrolyse der Polyurethane kommen, da dann die mechanischen Eigenschaften oder die schützende Funktion der Polyurethane nachlassen würde.

Die Aufgabe der Erfindung hat demgemäß darin bestanden, die Beständigkeit von Polyurethan-Formkörpern gegen Hydrolyse und Chemikalien sowie in aggresiven Medien zu verbessern, insbesondere gegen hydrolytischen Abbau in siedendem Wasser oder Säuren oder Laugen bei erhöhten Temperaturen.

Es wurde nun überraschenderweise gefunden, daß bereits bei Gehalten ab 5 Gew.-% Dimerdiol an der gesamten Polyolkomponente Polyurethan-Formkörper erhalten werden, deren Beständigkeiten gegenüber alkalischen und sauren wäßrigen Medien sprunghaft angestiegen ist.

### Beschreibung der Erfindung

Gegenstand der Erfindung ist die Verwendung von Dimerdiol und/oder Trimertriol als Polyol in Polyurethan-Formkörpern zur Verbesserung der Beständigkeit der Polyurethan-Formkörper gegen Hydrolyse, Chemikalien und aggressive Medien, wobei die den entsprechenden Polyurethanen zugrunde- liegende Polyolkomponente
a) zu 10 bis 40 Gew.-% aus Dimerdiol und/oder Trimertriol und
b) zu 60 bis 90 Gew.-% aus anderen Polyolen besteht, mit der Maßgabe, daß es sich bei den Polyolen zu b) um
   α) ein Polyesterpolyol, das ausgewählt ist aus der Gruppe der Polycarbonate und der Hydroxylgruppen-terminierten Polyester auf Basis der Dicarbonsäuren Adipin-, Phthal-, Malein-, Acelain- und Dimerfettsäure und/oder
   β) ein oleochemisches Polyol
handelt.

Unter Polyurethan-Formkörpern sind Beschichtungsmassen, Elastomere oder Gießharze, bevorzugt 2-Komponenten-Gießharze zu verstehen.

Beschichtungsmassen, bevorzugt zweikomponentige Beschichtungsmassen werden zum Oberflächenschutz verwendet, z.B. als Lacke oder als Unterbodenschutz.

Elastomere sind Polymere mit kautschukelastischem Verhalten, die z.B. Verwendung als Dichtungsmaterial finden können.

Polyurethan-Gießharze werden durch die DIN 55958 definiert.

Das Dimerdiol oder das Trimerdiol weisen Hydroxylzahlen von 180 bis 215, bevorzugt von 200 bis 210 auf.

Die Polyolkomponente der erfindungsgemäßen Polyurethanformkörper besteht zu 10 bis 40 Gew.%, aus Dimerdiol und/oder Trimerdiol, während der Rest ein anderes, in der Polyurethanchemie übliches Polyol darstellt.

Diese Polyole können Polyester- oder oleochemische Polyole oder Mischungen dieser Verbindungen darstellen.

Bevorzugt werden bei den Polyurethan-Formkörpern Polyester als Polyole verwendet.
Eine Übersicht über in der Polyurethanchemie übliche Polyester gibt z.B. Ullmannns Enzyklopädie der technischen Chemie, 4. Auflage, Band 19, Verlag Chemie, Weinheim, auf Seite 305.

Unter diesen Polyestern werden im Rahmen der Erfindung die Polycarbonate besonders bevorzugt.

Beispiele für geeignete Hydroxylgruppen-terminierte Polyester sind Polyester auf Basis von den Dicarbonsäuren Adipin-, Phthal-, Malein-, Acelain-, und Dimerfettsäuren und den Diolen wie Ethylenglykol, Propylenglykol, Neopentylglykol, 1,6-Hexandiol und 1,4-Butandiol.

Eine weitere Gruppe bevorzugt verwendbarer Polyole stellen die oleochemischen Polyole dar.

Unter oleochemischen Polyolen versteht man Polyole auf Basis natürlicher Öle und Fette, z.B. die Reaktionsprodukte von epoxidierten Fettstoffen mit mono-, di- oder polyfunktionellen Alkoholen oder Glycerinester langkettiger Fettsäuren, die zumindest teilweise mit Hydroxylgruppen substituiert sind.

Eine Untergruppe dieser Verbindungen sind die Ringöffnungsprodukte epoxidierter Triglyceride, also epoxidierter Fettsäureglycerinester, bei denen die Ringöffnung unter Erhalt der Esterbindungen ausgeführt worden ist. Zur Herstellung der Ringöffnungsprodukte kann man von einer Vielzahl epoxidierter Triglyceride pflanzlichen oder tierischen Ursprungs ausgehen. So sind beispielsweise epoxidierte Triglyceride geeignet, die 2 bis 10 Gewichtsprozent Epoxidsauerstoff aufweisen. Derartige Produkte sind durch Epoxidation der Doppelbindungen aus einer Reihe von Fetten und Ölen herstellbar, z.B. Rindertalg, Palmöl, Erdnußöl, Rüböl, Baumwollsaatöl, Sojaöl, Sonnenblumenöl und Leinöl. Besonders bevorzugte epoxidierte Triglyceride sind epoxidiertes Sojaöl und epoxidiertes Leinöl.

Als Alkohole für die Ringöffnung der epoxidierten Triglyceride können Methanol, Ethanol, Propanol, Isopropanol, Butanol, Hexanol, 2-Ethylhexanol, Fettalkohole mit 6 bis 22 C-Atomen, Cyclohexanol, Benzylalkohol, 1,2-Ethandiol, 1,2-Propandiol, 1,3-Propandiol, 1,4-Butandiol, 1,6-Hexandiol, Neopentylglykol, Trimethylolpropan, Glycerin, Trimethylolethan, Pentaerythrit, Sorbit sowie ethergruppenhaltige Hydroxyverbindungen wie Alkylglykole oder oligomere Glykole sowie oligomere Glycerine eingesetzt werden.

Die Ringöffnungsreaktion epoxidierter Fettsäureester oder Triglyceride mit einem Alkohol kann gegebenenfalls von einer Umesterung mit sich selber oder anderen, nachträglich zugefügten Triglyceriden, wie zum Beispiel Palmöl, Erdnußöl, Rüböl, Baumwollsaatöl, Sojaöl, Sonnenblumenöl und Leinöl, gefolgt sein. Solche oleochemischen Polyole sind z.B. in der deutschen Patentanmeldung DE-A1 41 28 649 beschrieben.

Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder -butylestern. Bevorzugt sind hier die Ringöffnungs- oder Umesterungsprodukte mit Alkoholen der Funktionalität 2 bis 4, insbesondere die Umsetzungsprodukte mit Ethylenglykol, Propylenglykol, oligomeren Ethylenglykolen, oligomeren Propylenglykolen, Glycerin, Trimethylolpropan oder Pentaerythrit. Die Herstellung derartiger Produkte kann nach bekannten Epoxidations- oder Ringöffnungsverfahren erfolgen, wobei die Umesterung während oder nach dem Ringöffnungsschritt durch Entfernen des niederen Alkohols aus den Reaktionsgleichgewicht durchgeführt werden kann. Bevorzugt sind Ringöffnungs- und Umesterungsprodukte, bei denen ein molares Verhältnis zwischen epoxidiertem Fettsäureester und dem zur Umsetzung verwendeten Alkohol von 1:1 bis 1:10 angewandt worden ist.

Ebenfalls zu den oleochemischen Polyolen zählen die Umsetzungsprodukte epoxidierter Fettalkohole mit C2-C8-Alkoholen der Funktionalität 1 bis 10, insbesondere 2 bis 4, im molaren Verhältnis der Epoxidgruppen zu den Hydroxylgruppen von 1:1 bis 1:10.

Im Rahmen der Erfindung ist auch die Verwendung von oleochemischen Polyolen möglich, die über die Umesterung von di- oder polyfunktionellen Alkoholen wie z.B. dem Additionsprodukt von Ethylenoxid oder Propylenoxid an Glycerin mit Triglyceriden, wie z.B. Palmöl, Erdnußöl, Rüböl, Baumwollsaatöl, Sojaöl, Sonnenblumenöl und Leinöl, zugänglich sind.

Die Hydroxylzahlen gemäß DIN 53240 der restlichen Polyole liegen im Bereich von von 5 bis 600, vorzugsweise von 20 bis 300, besonders bevorzugt von 50 bis 200.

Die Isocyanat-Komponente der erfindungsgemäßen Gießharze ist eine Isocyanatverbindung der Funktionalität 2 bis 4. Geeignet sind hier sowohl aromatische als auch aliphatische, monocyclische wie polycylische, mehrfunktionelle Isocyanatverbindungen. Eine Übersicht über in der Polyurethanchemie übliche Polyisocyanate gibt z.B. Ullmannns Enzyklopädie der technischen Chemie, 4. Auflage, Band 19, Verlag Chemie, Weinheim, auf Seite 303.

So kann nach einer ersten Ausführungsform als aromatische Isocyanatverbindung Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen größer als 2. Ein weiteres geeignetes aromatisches Diisocyanat ist Xylylendiisocyanat.

Darüber hinaus kann eine Vielzahl aliphatischer Isocyanate der Funktionalität 2 und höher eingesetzt werden. Beispiele sind hier Isophorondiisocyanat, tris(6-Isocyanatohexyl)isocyanurat, über Biuretgruppen trimerisiertes Hexamethylendiisocyanat und Dicyclohexylmethandiisocyanat als cyclische aliphatische Diisocyanate. Weitere Beispiele sind aliphatische, geradkettige Diisocyanate, wie sie durch Phosgenisierung von Diaminen gewonnen werden, zum Beispiel Tetramethylendiisocyanat oder Hexamethylendiisocyanat.

Als Isocyanat-Komponente in den erfindungsgemäßen Polyurethan-Formkörpern, insbesondere Zweikomponenten-Gießharze können außer den mehrfunktionellen IsocyanatVerbindungen an sich auch Prepolymere eingesetzt werden. Unter Prepolymeren werden hier die Addukte mehrfunktioneller Isocyanate an mehrfunktionelle Alkohole, etwa die Umsetzungsprodukte eines der vorgenannten aromatischen oder aliphatischen Diisocyanate mit Ethylenglykol, Propylenglykol, Glycerin, Trimethylolpropan oder Pentaerythrit verstanden. Auch Umstzungsprodukte von Diisocyanaten mit Polyetherpolyolen, zum Beispiel Polyetherpolyolen auf Basis Polyethylenoxid oder auf Basis Polypropylenoxid können als Prepolymere verwendet werden.

Bei der Herstellung der Polyurethanformkörper liegt das Äquivalentverhältnis der NCO-Gruppen zu den OH-Gruppen NCO:OH in der Regel im Bereich von 1,2:1 bis 0,8:1, bevorzugt 1,05:1 bis 0,95:1.

Die Polyurethan-Formkörpern, insbesondere Zweikomponenten-Gießharze und Beschichtungsmassen können weiterhin verschiedene Hilfsstoffe enthalten, die vorzugsweise dem Polyol zugemischt werden. Verwendet werden können hier zum Beispiel Füllstoffe. Als Füllstoffe geeignet sind gegenüber Isocyanaten nicht reaktive, anorganische Verbindungen wie zum Beispiel Kreide oder Gips, gefällte Kieselsäuren, Zeolithe, Bentonite, gemahlene Mineralien sowie andere, dem auf dem Arbeitsgebiet tätigen Fachmann bekannte anorganische Füllstoffe. Weiterhin können auch organische Füllstoffe verwendet werden, insbesondere Faserkurzschnitte und anderes. Bevorzugt sind Füllstoffe, die den Gießharzen Thixotropie verleihen.

Die erfindungsgemäßen Polyurethan-Formkörpern, insbesondere Zweikomponenten-Gießharze bzw. Beschichtungsmassen können weiterhin Beschleuniger enthalten. Geeignet sind zum Beispiel tertiäre Basen wie Bis-(N,N-dimethylamino)-diethylether, Dimethylaminocyclohexan, N,N-Dimethyl-benzylamin, N-Methylmorpholin sowie die Umsetzungsprodukte von Dialkyl-(β-hydroxyethyl)-amin mit Monoisocyanaten und Veresterungsprodukte von Dialkyl-(β-hydroxyethyl)-amin und Dicarbonsäuren. Ein weiterer wichtiger Beschleuniger ist das 1,4-Diamino-bicyclo-(2.2.2)-octan. Ferner können nichtbasische Substanzen als Beschleuniger verwendet werden. Hier seien Metallverbindungen genannt, beispielsweise Eisenpentacarbonyl, Eisenacetylacetonat sowie Zinn-(II)-(2-ethylhexoat), Dibutylzinndilaurat oder Molybdänglykolat.

Außer den genannten Verbindungen können die Polyurethan-Formkörpern, insbesondere Gießharze bzw. Beschichtungsmassen noch weitere Hilfsstoffe enthalten. Zu erwähnen sind hier Lösungsmittel. Geeignet sind Lösungsmittel, die ihrerseits nicht mit Isocyanatgruppen reagieren, wie zum Beispiel halogenierte Kohlenwasserstoffe, Ester, Ketone, aromatische Kohlenwasserstoffe und andere. Weiterhin können Weichmacher, Flammschutzmittel, Verzögerer, Farbstoffe und Alterungsschutzmittel, wie sie in entsprechenden Gießharzen bekannt sind, miteingearbeitet werden.

Die Isocyanat-Gießharze bzw. Beschichtungsmassen werden bis zu ihrer Anwendung zweikomponentig gelagert, daß heißt bis zu diesem Zeitpunkt werden Polyol und Isocyanatverbindung getrennt aufbewahrt. Zur Anwendung werden diese beiden Verbindungen miteinander vermischt und das Gemisch auf die zu verklebenden Substrate aufgetragen. Bezüglich des Mischungsverhältnisses und von Maßnahmen zur Beeinflussung der Topfzeit sie auf das allgemeine Fachwissen des Fachmanns verwiesen. Dies ist beispielsweise in der Monographie von Saunders und Frisch "Polyurethanes, Chemistry and Technology", Band XVI der Serie High Polymers "Interscience Publishers" New York - London, Teil II (1964), S. 490 - 524, dokumentiert. Um das richtige Mischungsverhältnis zu finden, wird der Fachmann im allgemeinen eine Äquivalenz an Isocyanat und OH-Gruppen anstreben. Dazu kann in Vorversuchen die OH-Zahl der Alkoholgemische und die Isocyanatzahl der Isocyanatverbindungen bestimmt werden, aus denen sich dann die Anzahl der Mole reaktiver Gruppen pro Gramm errechnen läßt.

Die erfindungsgemäß hergestellten Polyurethanformkörper sind im ausgehärtetem Zustand beständig gegen siedendes entsalztes oder salzhaltiges Wasser sowie gegen aggressive Medien wie Laugen und Säuren. Daher eignen sich die Gießharze und die Beschichtungsmassen zur Verwendung in der chemischen Industrie, in der Mineralöl-Industrie und in Bädern sowie bei Fassaden. Mit der Mischung wird eine wirtschaftliche Alternative zu den Harzen und Massen aus 100 % Dimerdiol zur Verfügung gestellt.

Die Erfindung wird anhand von nachfolgenden Beispielen im einzelnen erläutert:

### Beispiele

Alle prozentualen Angaben verstehen sich, sofern nicht anders angegeben, in Gewichtsprozent.

Die Untersuchen wurden an drei unterschiedlichen Polyesterpolyolen durchgeführt:
1. Polyol 1, Sovermol-Pol 1080/V, ein verzweigter Polyether/-ester-Polyalkohol auf oleochemischer Basis mit einer OH-Zahl (OHZ) von 170;
   (Hersteller: Firma Henkel KGaA);
2. Polyol 2, ein oleochemisches Polyol aus der Reaktion von epoxydiertem Sojaöl mit Vorlauffettsäure, OHZ = 96;
   (Hersteller: Firma Henkel KGaA);
3. Polyol 3, ein oleochemisches Polyol aus der Reaktion von epoxydiertem Sojaöl mit Methanol; OHZ = 184;
   (Hersteller: Firma Henkel KGaA).

Als Zusatz wurde ein Dimerdiol (Sovermol Pol 900, Henkel KGaA) mit der OHZ = 208 verwendet.

Aus den Polyolgemischen und Desmodur VKS (Diphenylmethandiisocyanat der Firma Bayer) wurden PUR-Prüfkörper (Durchmesser 5 cm) hergestellt. Danach wurden sie 24 Stunden bei Raumtemperatur (ca. 23 °C) und 2 d bei 80 °C ausgehärtet.
- Rezeptur: 20 g: Polyol-Mischung Desmodur VKS (entsprechend der OHZ der Polyolmischung)
- 5 %: Baylith-Paste, bezogen auf Polyol (Zeolith-Paste der Firma Bayer AG)
- 0,03 g: Fomrez UL 24 (Katalysator der Firma Witko).

Zur Bestimmung der Hydrolysestabilität wurden die Prüfkörper bei 80 °C in 20 %iger Kalilauge gelagert und in zeitlichen Abständen die Masse und die Shore-Härte bestimmt.

### Beispiel 1

Zusatz von 30 Gew.-% Dimerdiol zu den Polyester-Polyolen 1, 2 und 3. Zum Vergleich wurden die Werte von 100 % Polyolen 1, 2 und 3 in Klammern angegeben.

| | Polyester-Polyol | | |
|---|---|---|---|
| Zeit (Tage) | 1 | 2 | 3 |
| 0 | 15 (15) | 15 (15) | 15.1 (15.2) |
| 1 | 15 (15) | 15 (15) | 15.3 (15.5) |
| 4 | 15 (14.4) | 15 (15) | 15.2 (14.5) |
| 7 | 14.8 (13.2) | 15 (14.8) | 14.9 (12.2) |
| 14 | 14.5 (aufgelöst) | 14.8 (14.0) | - |

### Beispiel 2 Zusatz von Dimerdiol zum Polyester-Polyol 1

### a) Prüfkörpermasse (g) abhängig vom Dimerdiol-Gehalt in Gew.-% und von der Zeit in Tagen

| Zeit | % Dimerdiol | | | |
|---|---|---|---|---|
| (Tage) | 0 | 10 | 20 | 40 |
| 0 | 20 | 20 | 20 | 20 |
| 10 | 19.6 | 18.0 | 18.6 | 19.0 |
| 28 | 10.7 | 17.2 | 18.3 | 18.8 |

### b) Shore Härte D, abhängig vom Dimerdiol-Gehalt in Gew.-% und von der Zeit in Tagen

| Zeit | % Dimerdiol | | | |
|---|---|---|---|---|
| (Tage) | 0 | 10 | 20 | 30 |
| 0 | 66 | 69 | 67 | 63 |
| 10 | 68 | 60 | 56 | 46 |
| 28 | - | 61 | 62 | 50 |

### Beispiel 3 Zusatz von Dimerdiol zum Polyester-Polyol 2

### a) Prüfkörpermasse (g), abhängig vom Dimerdiol-Gehalt in Gew.-% und von der Zeit in Tagen

| Zeit | % Dimerdiol | | | |
|---|---|---|---|---|
| (Tage) | 0 | 10 | 20 | 40 |
| 0 | 15.8 | 16.7 | 15.9 | 15.7 |
| 3 | 15.3 | 16.5 | 15.9 | 15.8 |
| 4 | 15.0 | 16.5 | 15.8 | 15.8 |
| 6 | 14.2 | 15.8 | 15.4 | 15.4 |
| 21 | - | - | 14.0 | 14.4 |

### b) Shore-Härte A, abhängig vom Dimerdiol-Gehalt in Gew.-% und von der Zeit in Tagen

| Zeit | % Dimerdiol | | | |
|---|---|---|---|---|
| (Tage) | 0 | 10 | 20 | 40 |
| 0 | 38 | 38 | 38 | 49 |
| 3 | 45 | 40 | 36 | 46 |
| 4 | 46 | 44 | 36 | 49 |
| 6 | 51 | 44 | 39 | 46 |
| 21 | - | - | 48 | 58 |

### Beispiel 4 Zusatz von Dimerdiol zum Polyester-Polyol 3

### a) Prüfkörpermasse (g), abhängig vom Dimerdiol-Gehalt in Gew.-% und von der Zeit in Tagen

| Zeit | % Dimerdiol | | |
|---|---|---|---|
| (Tage) | 0 | 10 | 20 |
| 0 | 20 | 20 | 20 |
| 7 | 17.3 | 18.1 | 19.8 |

### b) Shore-Härte D, abhängig vom Dimerdiol-Gehalt in Gew.-% und von der Zeit in Tagen

| Zeit | % Dimerdiol | | |
|---|---|---|---|
| (Tage) | 0 | 10 | 20 |
| 0 | 71 | 63 | 51 |
| 7 | 64 | 60 | 47 |

## Patentansprüche

1. Verwendung von Dimerdiol und/oder Trimertriol als Polyol in Polyurethan-Formkörpern zur Verbesserung der Beständigkeit der Polyurethan-Formkörper gegen Hydrolyse, Chemikalien und aggressive Medien, wobei die den entsprechenden Polyurethanen zugrunde- liegende Polyolkomponente
a) zu 10 bis 40 Gew.-% aus Dimerdiol und/oder Trimertriol und
b) zu 60 bis 90 Gew.-% aus anderen Polyolen
besteht, mit der Maßgabe, daß es sich bei den Polyolen zu b) um
α) ein Polyesterpolyol, das ausgewählt ist aus der Gruppe der Polycarbonate und der Hydroxylgruppen-terminierten Polyester auf Basis der Dicarbonsäuren Adipin-, Phthal-, Malein-, Acelain- und Dimerfettsäure und/oder
β) ein oleochemisches Polyol
handelt.

2. Verwendung nach Anspruch 1, wobei die Polyurethan-Formkörper aus Polyurethan-Gießharzen hergestellt sind.

3. Verwendung nach Anspruch 1 und 2, wobei das Polyol zu b) eine Hydroxylzahl von 5 bis 600 aufweist.

4. Verwendung nach den Ansprüchen 1 bis 3, wobei das Polyurethan aus aromatischen Diisocyanaten hergestellt wird.

5. Verwendung nach den Ansprüchen 1 bis 3, wobei das Polyurethan aus aliphatischen Diisocyanaten hergestellt wird.

6. Verwendung nach den Ansprüchen 1 bis 3, wobei das Polyurethan aus Polyurethanprepolymeren mit im Mittel 2 oder mehr Isocyanatgruppen pro Molekül hergestellt wird.

7. Verwendung nach den Ansprüchen 1 bis 6, wobei bei der Herstellung des Polyurethans ein Äquivalentverhältnis von NCO:OH von 1,2:1 bis 0,8:1 eingehalten wird.

8. Verwendung nach den Ansprüchen 1 bis 7, wobei der Formkörper eine der Komponenten: Beschleuniger, Stabilisatoren, gegenüber Isocyanatgruppen nicht reaktive Lösungsmittel und/oder Verzögerer enthält.

9. Verwendung nach den Ansprüchen 1 bis 8, wobei der Formkörper übliche Füllstoffe wie zum Beispiel Kreide, Gips, Kieselsäure, organische oder anorganische Fasern und Zeolithpulver enthält.

## Claims

1. The use of dimerdiol and/or trimertriol as polyol in polyurethane mouldings for improving the resistance of the polyurethane mouldings to hydrolysis, chemicals and aggressive media, **characterized in that**, of the polyol component on which the corresponding polyurethanes are based,
a) 10 to 40% by weight consists of dimerdiol and/or trimer triol and
b) 60 to 90% by weight of other polyols,
with the proviso that the polyols b) are
α) a polyester polyol selected from the group of polycarbonates and hydroxyl-terminated polyesters based on the dicarboxylic acids adipic acid, phthalic acid, maleic acid, azelaic acid and dimer fatty acid
and/or
β) an oleochemical polyol.

2. The use claimed in claim 1, **characterized in that** the polyurethane mouldings are produced from polyurethane casting resins.

3. The use claimed in claims 1 and 2, **characterized in that** the polyol b) has a hydroxyl value of 5 to 600.

4. The use claimed in claims 1 to 3, **characterized in that** the polyurethane is produced from aromatic diisocyanates.

5. The use claimed in claims 1 to 3, **characterized in that** the polyurethane is produced from aliphatic diisocyanates.

6. The use claimed in claims 1 to 3, **characterized in that** the polyurethane is produced from polyurethane prepolymers containing on average two or more isocyanate groups per molecule.

7. The use claimed in claims 1 to 6, **characterized in that** an NCO:OH equivalent ratio of 1.2:1 to 0.8:1 is maintained during production of the polyurethane.

8. The use claimed in claims 1 to 7, **characterized in that** the moulding contains one of the following components: accelerators, stabilizers, solvents non-reactive to isocyanate groups and/or retarders.

9. The use claimed in claims 1 to 8, **characterized in that** the moulding contains typical fillers such as, for example, chalk, gypsum, silica, organic or inorganic fibers or zeolite powder.

## Revendications

1. Utilisation de dimère diol et/ou de trimère diol, comme polyol dans des solides moulés en polyuréthanne en vue d'améliorer la stabilité des solides moulés en polyuréthanne contre l'hydrolyse, les produits chimiques et les milieux agressifs, dans laquelle le composant polyol sur lequel repose les polyuréthannes correspondants, consiste :
a) pour 10 à 40 % en poids en du dimère diol et/ou du trimère diol et,
b) pour 60 à 90 % en poids en d'autres polyols, avec la restriction qu'il s'agit en ce qui concerne les polyols pour b),
α) d'un polyesterpolyol qui est choisi dans le groupe des polycarbonates et des polyesters terminés par des groupes hydroxyle à base d'acides dicarboxyliques: acide adipique, acide phtalique, acide maléique, acide azélaïque et acide gras dimère, et/ou
β) d'un polyol oléochimique.

2. Utilisation selon la revendication 1,
dans laquelle les solides moulés en polyuréthanne sont produits à partir de résines coulées en polyuréthanne.

3. Utilisation selon la revendication 1 ou la revendication 2,
dans laquelle le polyol pour b) possède un indice d'hydroxyle allant de 5 à 600.

4. Utilisation selon l'une quelconque des revendications 1 à 3,
dans laquelle le polyuréthane est produit à partir de diisocyanates aromatiques.

5. Utilisation selon l'une quelconque des revendications 1 à 3,
dans laquelle le polyuréthane est produit à partir de diisocyanates aliphatiques.

6. Utilisation selon l'une quelconque des revendications 1 à 3,
dans laquelle le polyuréthanne est produit à partir de prépolymères de polyuréthanne ayant en moyenne 1 ou davantage, de groupes isocyanate par molécule.

7. Utilisation selon l'une quelconque des revendications 1 à 6,
dans laquelle lors de la production du polyuréthanne, un rapport en équivalent de NCO : OH de 1,2 : 1 à 0,8 : 1 est maintenu.

8. Utilisation selon l'une quelconque des revendications 1 à 7,
dans laquelle le solide moulé renferme un des composants: accélérateurs, agents stabilisants, solvants non réactifs vis-à-vis des groupes isocyanate et/ou ralentisseurs.

9. Utilisation selon l'une quelconque des revendications 1 à 8,
dans laquelle le solide moulé renferme des substances de charge usuelles, comme par exemple de la craie, du gypse, de l'acide silicique, des fibres organiques ou minérales et de la zéolite en poudre.
